# EUROPÄISCHE PATENTSCHRIFT

(11) **EP 4 111 070 B1**
(45) Veröffentlichungstag und Bekanntmachung des Hinweises auf die Patenterteilung: **10.01.2024**
(21) Anmeldenummer: 20710062.9
(22) Anmeldetag: 25.02.2020
(51) Int. Cl.: F16D 65/12

(54) **BREMSSCHEIBE UND VERFAHREN ZU DEREN HERSTELLUNG**
BRAKE DISK AND METHOD FOR PRODUCING SAME
DISQUE DE FREIN ET SON PROCÉDÉ DE FABRICATION

(43) Veröffentlichungstag der Anmeldung: 04.01.2023
(73) Patentinhaber: C4 Laser Technology GmbH, 01705 Freital (DE)
(72) Erfinder: STEINMEIER, Tilo, 01737 Pohrsdorf (DE)
(74) Vertreter: Rauschenbach, Marion
(86) Internationale Anmeldenummer: PCT/EP2020/054888
(87) Internationale Veröffentlichungsnummer: WO 2021/170216

(56) Entgegenhaltungen:
- EP-A1- 3 034 902
- DE-A1-102004 016 092
- DE-A1-102004 016 096

## Beschreibung

Die vorliegende Erfindung bezieht sich auf das Gebiet der Fahrzeugtechnik und der Industrieanlagentechnik und betrifft eine Bremsscheibe, die mindestens eine Wärmeleitschicht mit gradiert eingestellter Wärmeleitfähigkeit und spezifischem Wärmewiderstand aufweist. Die Erfindung betrifft auch ein Verfahren zur Herstellung der erfindungsgemäßen Bremsscheibe. Die vorgeschlagene Bremsscheibe kann beispielsweise als innenbelüftete Bremsscheibe in Fahrzeugen oder als Bremsscheibe für Industriebremsen oder in Windkraftanlagen eingesetzt werden.

Herkömmliche Bremsscheiben in Fahrzeugen und in industriellen Anlagen sind entweder als Bremsscheibe in einteiliger Form aus einem metallischen oder keramischen Werkstoff oder als Verbundbremsscheibe beziehungsweise mehrteilige Bremsscheibe aus einem oder mehreren metallischen oder keramischen Materialien ausgebildet.

Bremsscheiben werden bei Kraftfahrzeugen an den rotierenden Vorder- und Hinterachsen befestigt und weisen hierfür plane Anlageflächen auf, die im Kontakt mit der Felge einerseits und dem Radlager andererseits stehen.

Zudem weisen Bremsscheiben Bereiche mit Reibflächen auf, über die die Bremswirkung im Zusammenwirken mit Bremsbelägen realisiert wird.

Zur besseren Ableitung der entstehenden Wärme können Bremsscheiben beispielsweise als innenbelüftete Scheibenbremsen ausgebildet sein. Hierzu weisen sie an der Innenseite des Bremsscheibentopfes entsprechende Lüftungskanäle auf, die einerseits Luft ansaugen, die die Bremsscheibe durchströmt und die entstehende Wärme in der Bremsscheibe ableiten und damit die Kühlung der Bremseinheit gewährleisten.

Zur Verbesserung des Verschleiß- und Korrosionsschutzes von Bremsscheiben werden im Stand der Technik verschiedene Lösungen vorgeschlagen.

Aus der DE 10 2008 053 637 A1 ist ein Reibring für eine Bremsscheibe bekannt, welcher zumindest bereichsweise eine Beschichtung aufweist, wobei die Beschichtung ein Dickenprofil mit unterschiedlichen Beschichtungsdicken aufweist. Die Beschichtung ist durch ein thermisches Spritzverfahren oder PVD-Verfahren aufgebracht.

Bekannt aus der DE 10 2005 008 569 A1 ist ein Verfahren zum Herstellen eines Reibelements, bei dem ein Reibelementgrundkörper bereitgestellt und eine Beschichtung aufgebracht wird. Die Beschichtung weist eine Einschmelzlegierung auf, die in einem thermischen Herstellungsverfahren eingeschmolzen wird.

Aus der WO 2007 / 043 961 A1 ist eine beschichtete Fahrzeugkomponente bekannt, die aus einem im Wesentlichen metallischen Grundmaterial hergestellt ist und mindestens eine Arbeitsfläche umfasst, die so angeordnet ist, dass sie auf einen Reibverschleiß bei Relativbewegung mit 5 Bewegungen einwirkt, und eine verschleißbeständige Beschichtung umfasst. Das Bauteil zeichnet sich insbesondere durch eine Deckbeschichtung aus, die mehr als 50Gew.-% und weniger als 99Gew .-% Molybdän umfasst, wobei der Rest vorzugsweise mindestens ein Element aus einer ersten Gruppe ist, die Aluminium, Bor, Kohlenstoff, Chrom, Kobalt, Lanthan, Mangan, Nickel, Niob, Sauerstoff, Silizium, Tantal, Wolfram, Yttrium und normale Verunreinigungen umfasst.

Aus der DE 10 2014 006 064 A1 ist ein Bauteil, umfassend ein Grauguss-Substrat und zumindest eine Deckschicht, bekannt, wobei zwischen dem Substrat und der einen Deckschicht unmittelbar auf dem Grauguss-Substrat eine Oberflächenschicht ausgebildet ist, die nitrid-, carbid- und/oxidhaltige Lagen aufweist. Die Deckschicht besteht aus einem Cermet-Werkstoff einer metallischen Matrix und einer darin verteilten Oxid-Keramikkomponente, die 30 bis 70 Gew.-% des Cermet-Werkstoffs ausmacht.

Aus der DE 10 2014 015 474 A1 ist eine Bremsscheibe mit einem Grauguss-Substrat mit mehreren zumindest auf der Reibfläche angeordneten Oberflächenschichten bekannt, wobei die Oberflächenschichten über dem Grauguss-Substrat in Abfolge vom Substrat zur Außenfläche zumindest eine Haftschicht, eine Korrosionsschutzschicht aus nitriertem, nitridiertem oder nitrocarburiertem Haftschichtmaterial und gegebenenfalls Grauguss-Material, eine optionale Oxidschicht im Wesentlichen aus Eisenoxid und eine Verschleißschutz- oder Reibschicht aus Oxidkeramik oder Cermet-Werkstoff aufweist. Die Haftschicht ist aus dem Material des Grauguss-Substrats mit einem auf 20 bis 60 Gew.-% erhöhten Anteil an Cr und/oder Mo aufgebaut, wobei der überwiegende Anteil des lamellaren Kohlenstoffs des Graugusses in der Haftschicht als Cr und/oder MoCarbid chemisch gebunden vorliegt.

Zudem ist aus der EP 3 034 902 A1 Bremsscheibe mit einem Scheibenhauptkörper, der an einem Drehkörper angebracht ist, der in einem Stück mit der Achse dreht und mehreren Aufbauschichten , die auf einer Oberfläche des Scheibenhauptkörpers laminiert sind, bekannt, wobei die Aufbauschichten auf der Oberfläche des Scheibenhauptkörpers mit Hilfe von Laser-Metallauftragsschweißen laminiert sind. Die Aufbauschichten sind aus einem Laminat aufgebaut, das aus zwei oder mehr Schichten gebildet ist, die auf der Oberfläche des Scheibenhauptkörpers laminiert sind. Das Laminat weist eine Innenschicht einer Matrix, die keine hochschmelzenden Metallteilchen mit einem höheren Schmelzpunkt als der Scheibenhauptkörper aufweist, auf, wobei die Innenschicht auf dem Scheibenhauptkörper laminiert ist. Zudem weist das Laminat eine Außenschicht auf, die auf der Innenschicht gebildet ist und die Matrix sowie hochschmelzende Metallteilchen mit einem höheren Schmelzpunkt als der Scheibenhauptkörper aufweist.

Mit den bekannten Lösungen werden verschiedene Beschichtung eines im Wesentlichen aus Grauguss bestehenden metallischen Grundkörpers bereitgestellt, die einen verbesserten Korrosions- und Verschleißschutz der Bremsscheibe ermöglichen.

Nachteilig ist jedoch, dass insbesondere bei den immer mehr in den Vordergrund rückenden Bremsen der Elektromobilität, die die Rekuperation zur Energierückgewinnung nutzen, die notwendigen Betriebstemperaturen im Zusammenwirken von Bremsscheibe und Bremsbelägen nicht erreicht werden, da aufgrund der Energieumwandlung die Bremsanlage wesentlich seltener beansprucht wird. Dies kann zu einer verschlechterten Bremsleistung bis hin zum vollständigen Ausfall der gesamten Bremsanlage führen.

Zudem ist aus dem Stand der Technik nachteilig, dass aufgrund der unterschiedlich vorgeschlagenen Bremsscheibenbeschichtungen, die im Wesentlichen als Hartstoffschicht ausgeführt sind, stets die passende Materialkombination der Bremsbeläge, die mit der Bremsscheibe zusammenwirken, kostenintensiv und aufwendig an die bestehenden Beschichtungen der Bremsscheibe angepasst werden müssen.

Und auch ist nachteilig, dass bei Bremsscheiben aufgrund unterschiedlichem thermischen Eintrag Spannungen innerhalb der Bremsscheibe entstehen, die durch Temperaturspitzen in Teilbereichen der Reibflächen entstehen. Dies führt nachteilig zum Verzug der Bremsscheibe (auch Schirmungseffekt oder Coning genannt), was wiederum zur Rissbildung, insbesondere in der obersten Hartstoffschicht, führt.

Die Aufgabe der vorliegenden Erfindung besteht darin, eine neuartige Bremsscheibe bereitzustellen, die die Nachteile des Standes der Technik beseitigt.

Die Aufgabe wird durch die in den Patentansprüchen angegebene Erfindung gelöst. Vorteilhafte Ausgestaltungen sind Gegenstand der Unteransprüche, wobei die Erfindung auch Kombinationen der einzelnen abhängigen Patentansprüche im Sinne einer Und-Verknüpfung einschließt, solange sie sich nicht gegenseitig ausschließen.

Die erfindungsgemäße Aufgabe wird mit einer Bremsscheibe gelöst, die einen metallischen Grundkörper, der mindestens ein ringförmig ausgebildetes Befestigungselement zum Befestigen der Bremsscheibe an einer rotierenden Achse, einen ersten Reibbereich, der einer rotierenden Achse zugewandt und als Kreisfläche ausgebildet ist, und einen zweiten Reibbereich, der dem ersten Reibbereich diametral gegenüberliegend und einer rotierenden Achse abgewandt angeordnet ist, aufweist, wobei der metallische Grundkörper im Bereich des ersten und zweiten Reibbereiches mindestens eine ringförmig ausgebildete Wärmeleitschicht aufweist, auf der mindestens eine tribologische beanspruchbare Hartstoffschicht angeordnet ist, wobei die mindestens eine Wärmeleitschicht auf dem metallischen Grundkörper und die tribologisch beanspruchbare Hartstoffschicht auf der Wärmeleitschicht mittels Laser-Auftragsschweißen angeordnet sind, sodass eine stoffschlüssige Verbindung der Schichten realisiert ist, wobei die Wärmeleitschicht aus mindestens zwei unterschiedlichen Materialien besteht und die Wärmeleitfähigkeit λ innerhalb der Wärmeleitschicht gradiert eingestellt ist, wobei mindestens in einem inneren Umfangsbereich der ersten und/oder zweiten Reibbereiche ein metallisches oder keramisches Material und/oder eine metallischen Legierung mit einer Wärmeleitfähigkeit λ₁ vorhanden ist, und wobei in einem äußeren Umfangsbereich der ersten und/oder zweiten Reibbereiche ein metallisches oder keramisches Material und/oder eine metallischen Legierung mit einer Wärmeleitfähigkeit λ₂ vorhanden ist, wobei mindestens λ₁ < λ < λ₂ ist.

Gelöst wird die erfindungsgemäße Aufgabe auch mit einer Bremsscheibe, aufweisend einen metallischen Grundkörper, der mindestens ein ringförmig ausgebildetes Befestigungselement zum Befestigen der Bremsscheibe an einer rotierenden Achse, einen ersten Reibbereich, der einer rotierenden Achse zugewandt und als Kreisfläche ausgebildet ist, und einen zweiten Reibbereich, der dem ersten Reibbereich diametral gegenüberliegend und einer rotierenden Achse abgewandt angeordnet ist, wobei der metallische Grundkörper im Bereich des ersten und/oder zweiten Reibbereiches mindestens eine ringförmig ausgebildete Wärmeleitschicht aufweist, auf der mindestens eine tribologische beanspruchbare Hartstoffschicht angeordnet ist, wobei die mindestens eine Wärmeleitschicht auf dem metallischen Grundkörper und die tribologisch beanspruchbare Hartstoffschicht auf der Wärmeleitschicht mittels Laser-Auftragsschweißen angeordnet sind, sodass eine stoffschlüssige Verbindung der Schichten realisiert ist, und wobei mindestens eine der Wärmeleitschichten in radialer Richtung zum Außenumfang der Bremsscheibe eine gradiert ausgebildete Schichtdicke dsw aufweist, wodurch der spezifische Wärmewiderstand Rₜₕᵢ in radialer Richtung zum Außenumfang der Bremsscheibe in der Wärmeleitschicht abnimmt.

Vorteilhafterweise sind mindestes zwei Wärmeleitschichten angeordnet, wobei eine erste Wärmeleitschicht auf dem metallischen Grundkörper und eine zweite Wärmeleitschicht auf der ersten Wärmeleitschicht angeordnet ist, wobei die mindestens zweite Wärmeleitschicht jeweils einen Grenzflächenbereich zur tribologisch beanspruchbaren Hartstoffschicht und zur ersten Wärmeleitschicht bildet.

In einer weiteren vorteilhaften Ausgestaltung der Bremsscheibe ist die mindestens eine Wärmeleitschicht und/oder tribologisch beanspruchbare Hartstoffschicht auf dem einer rotierenden Achse zugewandten Reibbereich gegenüber der mindestens einen Wärmeleitschicht und/oder beanspruchbaren Hartstoffschicht auf dem einer rotierenden Achse abgewandten Reibbereich mit unterschiedlicher Schichtdicke ausgebildet.

Auch vorteilhafterweise ist in radialer Richtung zum Außenumfang der Bremsscheibe mindestens eine Wärmeleitschicht in einem inneren Umfangsbereich, der sich bis maximal 40% der Umfangsfläche erstreckt, ein Material mit einer Wärmeleitfähigkeit λ₁ von 10 W/(m·K) bis 14 W/(m K), in einem mittleren Umfangsbereich, der sich von 30% bis maximal 65% der Umfangsfläche erstreckt, ein Material mit einer Wärmeleitfähigkeit λ₂ von 12 W/(m·K) bis 26 W/(m·K) und in einem äußeren Umfangsbereich, der sich von 60% bis zum Außenumfang der Umfangsfläche erstreckt, ein Material mit einer Wärmeleitfähigkeit λ₃ von 24 W/(m·K) bis 40 W/(m·K) vorhanden.

Vorteilhaft ist auch, wenn mindestens eine Wärmeleitschicht in radialer Richtung zum Außenumfang der Bremsscheibe eine kontinuierlich oder sprunghaft zunehmende Schichtdicke dsw aufweist.

Vorteilhafterweise weist mindestens eine Wärmeleitschicht eine Schichtdicke d_{SWi} von 50µm bis 500µm, besonders vorteilhaft eine Schichtdicke d_{SWi} von 100µm bis 150µm, auf.

Weiterhin ist vorteilhaft, wenn in radialer Richtung zum Außenumfang der Bremsscheibe die Wärmeleitschicht in einem inneren Umfangsbereich, der sich bis maximal 40% der Umfangsfläche erstreckt, eine 10% - 15% größere Schichtdicke d_{SWi} und in einem mittleren Umfangsbereich, der sich von 30% bis maximal 65% der Umfangsfläche erstreckt, eine 5% - 10% größere Schichtdicke d_{SW2} gegenüber der Schichtdicke dsws in einem äußeren Umfangbereich, der sich von 60% der Umfangsfläche bis zum Außenumfang erstreckt, aufweist, wobei die Schichtzusammensetzung aus Wärmeleitschicht und tribologisch beanspruchbarer Hartstoffschicht konstant ist.

Vorteilhafterweise ist die Wärmeleitschicht aus einer Al-basierten, Fe-basierten, Ni-basierten Cr-basierten und/oder Cu-basierten Legierung hergestellt.

Ebenfalls vorteilhafterweise weist mindestens die Wärmeleitschicht zusätzlich karbidische und/oder oxidkeramische Hartstoffpartikel auf, wobei vorteilhafterweise die Hartstoffpartikel der Wärmeleitschicht eine mittlere Partikelgröße D₅₀ von 0,5µm bis 120µm aufweisen, und wobei ebenfalls vorteilhafterweise der Volumenanteil der Hartstoffpartikel in der Wärmeleitschicht 1% bis 80%, besonders vorteilhaft 30% bis 50% beträgt.

In einer vorteilhaften Ausgestaltung der Bremsscheibe ist als Wärmeleitschicht eine Legierung vorhanden, bei der in axialer Richtung die geringste Wärmeleitfähigkeit in einem radialen Teilbereich und im Grenzflächenbereich zur tribologisch beanspruchbaren Hartstoffschicht und die höchste Wärmeleitfähigkeit im Grenzflächenbereich zu einer weiteren Wärmeleitschicht oder dem metallischen Grundkörper vorhanden ist.

Vorteilhafterweise ist mindestens zwischen dem metallischen Grundkörper und der mindestens ersten Wärmeleitschicht eine Haftschicht vorhanden.

Weiterhin weist vorteilhafterweise die tribologisch beanspruchbare Hartstoffschicht mindestens eine Schichtdicke ds_{H} von 50µm bis 500µm, und besonders vorteilhaft eine Schichtdicke d_{SH} von 200µm bis 250µm, auf.

Die tribologisch beanspruchbare Hartstoffschicht ist vorteilhafterweise aus einem Cermet, besonders vorteilhaft aus Siliciumcarbid, Borcarbid, Wolframcarbid, Vanadiumcarbid, Titancarbid, Tantalcarbid, Chromcarbid und/oder einer Oxidkeramik, und ganz besonders vorteilhaft aus Wolframcarbid mit einer Edelstahlmatrix der Werkstoffgruppe 4 oder 5 mit einem Ni-Anteil ≤ 15 Ma.-%.

Die erfindungsgemäße Aufgaben wird zudem durch ein Verfahren zur Herstellung der erfindungsgemäß beanspruchten Bremsscheibe gelöst, bei dem mindestens auf einem metallischen Grundkörper mittels Laserstrahl-Auftragsschweißen mindestens teilweise eine erste Wärmeleitschicht stoffschlüssig angeordnet wird, und nachfolgend eine tribologisch beanspruchbare Hartstoffschicht auf der ersten Wärmeleitschicht stoffschlüssig angeordnet wird, wobei die Wärmeleitschicht aus mindestens zwei unterschiedlichen Materialien angeordnet wird und die Wärmeleitfähigkeit λᵢ innerhalb der Wärmeleitschicht gradiert eingestellt wird, sodass die Wärmeleitschicht in radialer Richtung eine zunehmende Wärmeleitfähigkeit λ aufweist, wobei mindestens in einem inneren Umfangsbereich der ersten und/oder zweiten Reibbereiche ein metallisches oder keramisches Material und/oder eine metallischen Legierung mit einer Wärmeleitfähigkeit λ₁ und in einem äußeren Umfangsbereich der ersten und/oder zweiten Reibbereiche ein metallisches oder keramisches Material und/oder eine metallischen Legierung mit einer Wärmeleitfähigkeit λ₂ angeordnet wird, und abschließend die Oberfläche der tribologisch beanspruchbaren Hartstoffschicht bearbeitet wird.

Zudem wird erfindungsgemäß mindestens auf einem metallischen Grundkörper mittels Laserstrahl-Auftragsschweißen mindestens teilweise eine erste Wärmeleitschicht stoffschlüssig angeordnet wird, und nachfolgend eine tribologisch beanspruchbare Hartstoffschicht auf der ersten Wärmeleitschicht stoffschlüssig angeordnet wird, sodass eine stoffschlüssige Verbindung der Schichten realisiert wird, wobei mindestens eine Wärmeleitschicht in radialer Richtung zum Außenumfang der Bremsscheibe mit einer gradiert ausgebildeten Schichtdicke dsw angeordnet wird, wodurch der spezifische Wärmewiderstand Rₜₕᵢ in radialer Richtung zum Außenumfang der Bremsscheibe in der Wärmeleitschicht abnimmt.

In einer vorteilhaften Ausgestaltung des Verfahrens wird in einem ersten Schritt in radialer Richtung die Wärmeleitschicht in einem inneren Umfangsbereich, der sich bis maximal 35% der Umfangsfläche erstreckt, mit einer 10% - 15% größere Schichtdicke d_{S1} und in einem mittleren Umfangsbereich, der sich von 30% bis maximal 65% der Umfangsfläche erstreckt, mit einer 5% - 10% größeren Schichtdicke d_{S2} gegenüber der Schichtdicke d_{S3} in einem äußeren Umfangbereich, der sich von 60% der Umfangsfläche bis zum Außenumfang der Bremsscheibe erstreckt, angeordnet, sodass der spezifische Wärmewiderstand Rₜₕᵢ in der Wärmeleitschicht vom inneren Umfangsbereich zum äußeren Umfangsbereich gradiert abnimmt.

Vorteilhafterweise wird in radialer Richtung zum Außenumfang der Bremsscheibe mindestens eine Wärmeleitschicht in einem inneren Umfangsbereich, der sich bis maximal 35% der Umfangsfläche erstreckt, ein Material mit einer Wärmeleitfähigkeit λ₁ von 10 W/(m·K) bis 14 W/(m K), in einem mittleren Umfangsbereich, der sich von 30% bis maximal 65% der Umfangsfläche erstreckt, ein Material mit einer Wärmeleitfähigkeit λ₂ von 12 W/(m·K) bis 26 W/(m·K) und in einem äußeren Umfangsbereich, der sich von 60% bis zum Außenumfang der Umfangsfläche erstreckt, ein Material mit einer Wärmeleitfähigkeit λ₃ von 24 W/(m·K) bis 40 W/(m - K) angeordnet.

Besonders vorteilhaft ist es, wenn vor dem Anordnen der Wärmeleitschicht mittels Laser-Auftragsschweißen der metallische Grundkörper mindestens in einem Teilbereich der ersten und/oder zweiten Reibbereiche auf eine Temperatur von 150°C bis 500°C erwärmt wird.

Mit der erfindungsgemäßen Lösung wird eine neuartige Bremsscheibe bereitgestellt, mit der insbesondere der thermische Haushalt in effizienter Weise in der gesamten Bremsscheibe gesteuert sowie eine homogene Temperaturverteilung innerhalb der Bremsscheibe bei verbesserter Bremsleistung ermöglicht wird. Zudem werden mit der neuen Bremsscheibe thermische Spannungen und Rissbildungen in einfacher Weise wirkungsvoll verhindert, wobei der thermische Eintrag in die Bremsscheibe homogen verteilt wird und die Temperaturverteilung innerhalb der Bremsscheibe geregelt erfolgt.

Die neuartig ausgebildete Bremsscheibe ist in Industrieanlagen, Windkraftanlagen und insbesondere in Fahrzeugen einsetzbar, wobei unter Fahrzeuge nicht nur Personenkraftwagen, sondern auch Lastkraftwagen, Kleinkrafträder und Fahrräder verstanden werden sollen.

Die erfindungsgemäße Bremsscheibe weist einen metallischen Grundkörper auf, der ein ringförmig ausgebildetes Befestigungselement zum Befestigen der Bremsscheibe an einer rotierenden Achse, einen einer der rotierenden Achse zugewandten und als Kreisfläche ausgebildeten ersten Reibbereich und einen dem ersten Reibbereich diametral und einer rotierenden Achse abgewandten und ebenfalls als Kreisfläche ausgebildeten zweiten Reibbereich aufweist. Zudem weist die Bremsscheibe auf dem ersten und/oder zweiten Reibbereich mindestens eine erfindungsgemäß ausgebildete Wärmeleitschicht und eine darauf angeordnete tribologisch beanspruchbare Hartstoffschicht auf.

Bei Bremsvorgängen entstehen typische Temperaturkennfelder.

Es wurde festgestellt, dass das ringförmig ausgebildete Befestigungselement zum Befestigen der Bremsscheibe an einer rotierenden Achse eine wesentlich geringere thermische Belastung aufweist, als die erste und zweite Reibbereich des metallischen Grundkörpers.

Die geringere thermische Belastung des ringförmig ausgebildeten Befestigungselementes ist durch das Material des metallischen Grundkörpers bedingt, der üblicherweise wie der metallische Grundkörper aus Grauguss hergestellt ist und damit eine hohe Wärmeleitfähigkeit λ im Bereich von ca. 50 W/(m·K) aufweist.

Im Gegensatz dazu ist die Temperatur insbesondere im äußeren Umfangsbereich der ersten und zweiten Reibbereiche stets höher als im inneren Umfangsbereich der Bremsscheibe, da die entstehende Reibwärme aus dem inneren Umfangsbereich direkt an das in Kontakt stehende und benachbart angeordnete ringförmig ausgebildete Befestigungselement abgeleitet wird.

Es konnte herausgefunden werden, dass der zweite Reibbereich, der einer rotierenden Achse abgewandt ist, bei Bremsvorgängen stets eine höhere Temperatur gegenüber dem diametral angeordneten ersten Reibbereich bei Bremsvorgängen aufweist. Es konnte überraschenderweise festgestellt werden, dass die auftretenden Temperaturunterschiede zwischen dem erstem und zweitem Reibbereich nachteilig dazu führen, dass sich die Bremsscheibe infolge des Temperaturgradienten verzieht (Schirmungseffekt, Coning), die Oberfläche der Hartstoffschicht sich wellenartig verformt und dadurch innerhalb der tribologisch beanspruchbaren Hartstoffschicht eine Rissbildung verursacht.

Um eine homogene thermische Verteilung und Belastung und einen ausgeglichenen Wärmehaushalt der tribologisch beanspruchbaren Hartstoffschicht und der gesamten Bremsscheibe zu erreichen, wird erfindungsgemäß vorgeschlagen, mindestens eine speziell ausgebildete Wärmeleitschicht zwischen dem metallischen Grundkörper und der tribologisch beanspruchbaren Hartstoffschicht anzuordnen, die in radialer Richtung vom ringförmig ausgebildeten Befestigungselement zum Außenumfang der Bremsscheibe eine gradiert eingestellte Wärmeleitfähigkeit λᵢ und einen gradiert eingestellten spezifischen Wärmewiderstand Rₜₕᵢ aufweist.

Dies wird erfindungsgemäß dadurch erreicht, dass die mindestens eine Wärmeleitschicht aus mindestens zwei unterschiedlichen Materialien besteht, die unterschiedliche Wärmeleitfähigkeiten aufweisen. Insofern ist die Wärmeleitfähigkeit λᵢ innerhalb der Wärmeleitschicht gradiert eingestellt, wobei mindestens in einem inneren Umfangsbereich der ersten und/oder zweiten Reibbereiche ein metallisches oder keramisches Material und/oder eine metallische Legierung mit einer Wärmeleitfähigkeit λ₁ vorhanden ist. In einem äußeren Umfangsbereich der ersten und/oder zweiten Reibbereiche ist ein metallisches oder keramisches Material und/oder eine metallische Legierung mit einer Wärmeleitfähigkeit λ₂ vorhanden. Grundsätzlich gilt bei der Auswahl der Materialien der Wärmeleitschicht, dass in radialer Richtung der Bremsscheibe die Wärmeleitfähigkeit λ₁ im inneren Umfangsbereich stets geringer ist als die Wärmeleitfähigkeit λ₂ im äußeren Umfangsbereich. Insofern ist erfindungsgemäß λ₁ < λ < λ₂.

Durch die unterschiedliche Auswahl des metallisches oder keramisches Materials und/oder der metallischen Legierung innerhalb einer Wärmeleitschicht wird somit in einem inneren Umfangsbereich der Bremsscheibe die entstehende Bremswärme durch den Bereich mit geringer Wärmeleitfähigkeit λ₁ verzögert abgeleitet, was zu einer schnelleren Temperierung und Einsatzbereitschaft der Bremsscheibe in diesem Bereich führt. Im Gegensatz dazu wird in dem äußeren Umfangsbereich der Bremsscheibe die entstehende Bremswärme durch das Material mit hoher Wärmeleitfähigkeit λ₂ rasch aus der tribologisch beanspruchbaren Hartstoffschicht in den metallischen Grundkörper abgeleitet, was zu einer raschen Abkühlung der tribologisch beanspruchbaren Hartstoffschicht führt und die Standzeit der Bremsscheibe, insbesondere durch das Verhindern von thermischen Spitzenbelastungen im äußeren Umfangsbereich, verbessert.

Zur Erzielung einer schnellen Einsatzbereitschaft der Bremsanlage, insbesondere bei Fahrzeugen mit Nutzung der Rekuperation der Bremsenergie und der damit verbundenen geringeren Anzahl von Bremsvorgängen, kann die jeweilige Wärmeleitschicht mindestens in radialer Richtung zum Außenumfang der Bremsscheibe auch mehrere unterschiedliche Bereiche von Materialien aufweisen, die sich hinsichtlich ihrer Wärmeleitfähigkeit λᵢ unterscheiden.

Durch mehrere Bereiche mit unterschiedlichen Materialen und damit unterschiedlichen Wärmeleitfähigkeiten λ₁, λ₂...λᵢ wird eine kontinuierliche oder auch sprunghafte Gradierung der Wärmeleitfähigkeit innerhalb der Wärmeleitschicht erreicht.

Durch die geringere Wärmeleitfähigkeit λ₁ mindestens eines der Materialien der Wärmeleitschicht, das in einem inneren Umfangsbereich der ersten und/oder zweiten Reibbereiche angeordnet ist, wird die erzeugte Reibwärme in der tribologisch beanspruchbaren Hartstoffschicht sowie der Wärmeleitschicht in diesem speziellen inneren Umfangsbereich gespeichert. Dadurch wird die Betriebstemperatur der Bremsscheibe durch eine Art Isolationseffekt im betreffenden inneren Umfangsbereich der Hartstoffschicht schneller erreicht und eine schnellere Betriebstemperatur der Bremsescheibe ermöglicht.

Der üblicherweise in einer Bremsscheibe vorherrschende Temperaturgradient zwischen dem inneren Umfangsbereich und dem äußeren Umfangsbereich insbesondere in der tribologisch beanspruchbaren Hartstoffschicht wird durch die unterschiedlich eingestellten Wärmeleitfähigkeiten λᵢ und die unterschiedlich eingestellten spezifischen Wärmewiderstände Rₜₕᵢ in der Wärmeleitschicht kompensiert und die Temperatur innerhalb der Bremsscheibe homogenisiert, wodurch die Standzeit verbessert und eine gleichmäßige Bremswirkung über die gesamte Fläche der tribologisch beanspruchbaren Hartstoffschicht erreicht wird.

In einer vorteilhaften Ausgestaltung der Erfindung können mindestes zwei Wärmeleitschichten auf mindestens dem ersten und/oder zweiten Reibbereich angeordnet sein, wobei eine Wärmeleitschicht auf dem metallischen Grundkörper und die weitere Wärmeleitschicht auf der davor angeordneten Wärmeleitschicht aufgebracht ist. Die oberste Wärmeleitschicht bildet dabei jeweils eine Grenzfläche zur tribologisch beanspruchbaren Hartstoffschicht und zu der auf dem metallischen Grundkörper angeordneten Wärmeleitschicht.

Von Bedeutung hierbei ist, dass im Fall mehrerer Wärmeleitschichten zumindest die zuletzt angeordnete Wärmeleitschicht, die eine stoffschlüssige Verbindung zur tribologisch beanspruchbaren Hartstoffschicht bildet, eine Gradierung der Wärmeleitfähigkeit λᵢ und damit auch des spezifischen Wärmewiderstandes Rₜₕᵢ innerhalb dieser Wärmeleitschicht aufweist. Damit wird insbesondere erreicht, dass eine thermische Belastung, die bei Bremsvorgängen in der tribologisch beanspruchbaren Hartstoffschicht im äußeren Umfangsbereich auftritt, vermieden und die entstehende Bremswärme gezielt aus dem äußeren Umfangsbereich in den metallischen Grundkörper abgeleitet wird, während im inneren Umfangsbereich die Wärme gezielt verzögert abgeleitet und zum Erreichen einer optimalen Betriebstemperatur in der tribologisch beanspruchbaren Hartstoffschicht herbei geführt wird.

Vorteilhafterweise ist die Wärmeleitschicht derart aufgebaut, dass in radialer Richtung in einem inneren Umfangsbereich, der sich bis maximal 40% der Umfangsfläche erstreckt, ein Material mit einer Wärmeleitfähigkeit λ₁ von 10 W/(m·K) bis 14 W/(m K), in einem mittleren Umfangsbereich, der sich von 30% bis maximal 65% der Umfangsfläche erstreckt, ein Material mit einer Wärmeleitfähigkeit λ₂ von 12 W/(m.K) bis 26 W/(m·K) und in einem äußeren Umfangsbereich, der sich von 60% bis zum Außenumfang der Umfangsfläche erstreckt, ein Material mit einer Wärmeleitfähigkeit λ₃ von 24 W/(m - K) bis 40 W/(m - K) vorhanden ist.

Insofern weist mindestens eine Wärmeleitschicht im ersten und/oder zweiten Reibbereich unterschiedliche Wärmeleitfähigkeiten λᵢ auf, die die unterschiedlichen Temperaturen bei Bremsvorgängen berücksichtigen.

Durch das erfindungsgemäß vorgeschlagene Beschichtungsverfahren des Laser-Auftragsschweißens werden besonders vorteilhafte technische Wirkungen und Effekte erzielt.

Einerseits wird zwischen den anzuordnenden Schichten, nämlich der mindestens einen Wärmeleitschicht und der tribologisch beanspruchbaren Hartstoffschicht, aber auch zwischen der mindestens einen Wärmeleitschicht und dem metallischen Grundkörper eine stoffschlüssige Verbindung hergestellt. Dies bringt den Vorteil, dass eine bessere Wärmeleitung zwischen den Schichten und eine bessere Verbindung der Schichten untereinander ermöglicht wird. Zudem wird verbesserter Korrosions- und Verschleißschutz realisiert.

Zudem kann in einfacher Weise eine Gradierung der einzustellenden Wärmeleitfähigkeit λᵢ und des einzustellenden spezifischen Wärmewiderstandes Rₜₕᵢ der Wärmeleitschicht speziell durch das erfindungsgemäß vorgeschlagene Laser-Auftragsschweißen erreicht werden, was insbesondere eine kontinuierliche oder sprunghafte Einstellung der Wärmeleitfähigkeit in radialer Ausbildung zum Bremsscheibenumfang ermöglicht. Durch das Laser-Auftragsschweißen wird ermöglicht, dass während des Auftragens kontinuierlich oder diskontinuierlich unterschiedliche Materialen mit unterschiedlichen Wärmeleitfähigkeiten λᵢ und spezifischen Wärmewiderständen Rₜₕᵢ in einem Herstellungsverfahren auf die ersten und zweiten Reibbereiche angeordnet werden können. Zudem wird durch das Laser-Auftragsschweißen ermöglicht, dass die Schichtdicke ds jeder Wärmeleitschicht auf der Bremsscheibe variiert und damit ebenfalls der Wärmewiderstand Rₜₕᵢ individuell in bestimmten Umfangsbereichen der Bremsscheibe eingestellt wird.

Al-basierte, Fe-basierte, Ni-basierte, Cu-basierte und/oder Cr-basierte Legierung als Material für die erfindungsgemäßen Wärmeleitschichten bieten den Vorteil, dass über die Zusammensetzung der Legierungselemente oder der metallischen oder keramischen Materialien die Wärmeleitfähigkeit λᵢ und damit der spezifische Wärmewiderstand Rₜₕᵢ mindestens in radialer und axialer Richtung kontinuierlich oder auch sprunghaft gradiert durch das Laser-Auftragsschweißverfahren eingestellt werden kann.

Die Anordnung der Wärmeleitschicht mittels Laser-Auftragsschweißen ermöglicht somit die Materialzusammensetzung, den spezifischen Wärmewiderstand Rₜₕᵢ und die Wärmeleitfähigkeit λᵢ variabel einzustellen, um beispielsweise in thermisch höher belasteten Bereichen der ersten oder zweiten Reibbereiche der Bremsscheibe ein Material mit einer hohen Wärmeleitfähigkeit λᵢ bzw. geringen Wärmewiderstand Rₜₕᵢ anzuordnen und in Bereichen mit zu geringer thermischer Belastung eine Material mit hohem spezifischen Wärmewiderstand Rₜₕᵢ bzw. geringer Wärmeleitfähigkeit λᵢ einzusetzen.

Als weitere Möglichkeit der thermischen Homogenisierung der Bremsscheibe wird erfindungsgemäß vorgeschlagen, eine Wärmleitschicht aus nur einem Material bereitzustellen und die Schichtdicke dsw der Wärmeleitschicht in radialer Richtung zum Außenumfang der Bremsscheibe gradiert auszubilden, wodurch der spezifische Wärmewiderstand Rₜₕᵢ innerhalb der Wärmeleitschicht unterschiedlich eingestellt ist und so an die gewünschten Temperaturkennfelder der ersten und zweiten Reibbereich angepasst ist.

In einer besonders vorteilhaften Ausgestaltung weist die Wärmeleitschicht in radialer Richtung in einem inneren Umfangsbereich, der sich bis maximal 35% der Umfangsfläche erstreckt, eine 10% - 15% größere Schichtdicke d_{SWi} und in einem mittleren Umfangsbereich, der sich von 30% bis maximal 65% der Umfangsfläche erstreckt, eine 5% - 10% größere Schichtdicke d_{SW2} gegenüber der Schichtdicke dsws in einem äußeren Umfangbereich, der sich von 60% der Umfangsfläche bis zum Außenumfang der Bremsscheibe erstreckt, auf.

Durch die Bereitstellung unterschiedlicher Schichtdicken dsw mindestens einer Wärmeleitschicht wird insbesondere dem unerwünschten Schirmungseffekt, also dem Kippen des ersten und zweiten Reibbereiches und dem damit verbundenen Verzug der gesamten Bremsscheibe mit einhergehender Ausbildung von Wellenformen in der tribologische beanspruchbaren Hartstoffschicht, entgegengewirkt. Zudem wird erreicht, dass der Wärmehaushalt in der Bremsscheibe durch den unterschiedlichen spezifischen Wärmewiderstand Rₜₕᵢ individuell eingestellt ist.

In einer weiteren vorteilhaften Ausgestaltung weist die Wärmeleitschicht zusätzlich Hartstoffpartikel auf, die zu einer verbesserten Festigkeit und Härte der Wärmeleitschicht und damit dem Schichtaufbau im ersten und zweiten Reibbereich führt. Besonders vorteilhaft weisen die Hartstoffpartikel eine mittlere Partikelgröße D₅₀ von 0,5µm bis 120µm auf und können zudem mit einem Volumenanteil von 1% bis 80% besonders vorteilhaft zwischen 30% und 50% vorhanden sein.

Vorteilhafterweise wird eine Bremsscheibe bereitgestellt, bei der mindestens zwischen dem metallischen Grundkörper und der mindestens ersten Wärmeleitschicht eine Haftschicht vorhanden ist. Eine Haftschicht führt zu einer verbesserten Anbindung der ersten Wärmeleitschicht auf dem metallischen Grundkörper, sodass eine mechanische Vorbereitung der Oberfläche des metallischen Grundkörpers entfallen kann. Möglich ist auch, dass zwischen den Wärmeleitschichten und/oder zwischen einer Wärmeleitschicht und der tribologisch beanspruchbaren Hartstoffschicht eine Haftschicht vorgesehen ist, um die Haftung der einzelnen Schichten untereinander und die Haftfestigkeit des gesamten Schichtaufbaus zu verbessern.

Für eine kostengünstige Herstellung und lange Standzeit der Bremsscheibe ist es von Vorteil, wenn die tribologisch beanspruchbare Hartstoffschicht mindestens eine Schichtdicke d_{SH} von 50µm bis 500µm und ganz besonders vorteilhaft eine Schichtdicke d_{SH} von 200µm bis 250µm aufweist. Als besonders vorteilhaft hat sich dabei herausgestellt, wenn die tribologisch beanspruchbare Hartstoffschicht aus einem Cermet, wie beispielsweise Siliciumcarbid, Borcarbid, Wolframcarbid, Vanadiumcarbid, Titancarbid, Tantalcarbid, Chromcarbid und/oder einer Oxidkeramik ist, und besonders vorteilhaft aus Wolframcarbid mit einer Edelstahlmatrix der Werkstoffgruppe 4 oder 5 mit einem Ni-Anteil ≤ 15 Ma.-% .

Es wurde festgestellt, dass es beim Anordnen der Wärmeleitschicht auf dem metallischen Grundkörper zu einem thermisch bedingten Verzug der Reibbereiche kommt, wodurch der zuvor genannte Schirmungseffekt auftritt. Dem entgegenzuwirken wird vorteilhafterweise vorgeschlagen, in einem vorgelagerten Wärmebehandlungsprozess vor dem stoffschlüssigen Anordnen der Wärmeleitschicht mittels Laser-Auftragsschweißen den metallische Grundkörper mindestens in einem Teilbereich der ersten und/oder zweiten Reibbereiche auf eine Temperatur von 150°C bis 500°C zu erwärmen. Dadurch können die thermisch induzierten Spannungen innerhalb der Bremsscheibe minimiert werden. Zudem wird eine verbesserte stoffliche Verbindung der Wärmeleitschicht mit dem metallischen Grundkörper erreicht. Außerdem kann durch das vorherige Erwärmen des metallischen Grundkörpers die Laserintensität beim Laser-Auftragsschweißen verringert werden, was sich wiederum positiv auf die schädigungsfreie Integration des Karbides in der Hartstoffschicht auswirkt. Ein Laser mit geringere Laserleistung führt zu geringeren Herstellungskosten.

Mit der erfindungsgemäßen Lösung wird eine neue Bremsscheibe bereitgestellt, mit der mehrere technische Vorteile und Wirkungen erreicht werden.

Die mindestens eine Wärmeleitschicht auf dem ersten und/oder zweiten Reibbereich des metallischen Grundkörpers weist entweder unterschiedliche Materialien oder nur ein Material mit unterschiedlicher Schichtdicke auf, die sich in ihrer Wärmeleitfähigkeit und/oder ihrem spezifischen Wärmewiderstand unterscheiden und dadurch eine thermische Beeinflussung einzelner Bereiche der Bremsscheibe ermöglichen. Die unterschiedlichen Materialien oder die unterschiedliche Schichtdicke der mindestens einen Wärmeleitschicht sind dabei derart gradiert eingestellt, so dass die Wärmeleitfähigkeit in radialer Richtung mindestens zum Außenumfang der Bremsscheibe zunimmt beziehungsweise der spezifische Wärmewiderstand in radialer Richtung mindestens zum Außenumfang der Bremsscheibe kontinuierlich oder sprunghaft abnimmt. Dies bietet den Vorteil, dass
- thermische Belastungsspitzen in einzelnen Bereichen der Bremsscheibe gezielt vermieden,
- eine homogene Temperaturverteilung innerhalb der Bremsscheibe eingestellt,
- ein Verzug der Bremsscheibe und Rissbildung verhindert,
- eine schnellere Einsatzbereitschaft und Bremsleistung bereitgestellt und
- eine längere Standzeit der Bremsscheibe erreicht wird.

Nachfolgend wird die Erfindung anhand von drei Ausführungsbeispielen näher erläutert.

Dabei zeigen
- Fig. 1: einen schematischen Querschnitt durch einen Bremsscheibe,
- Fig. 2: einen Detailausschnitt der ersten und zweiten Reibbereiche,
- Fig. 3: eine schematische Darstellung der Beschichtung einer Bremsscheibe mit konstanter Schichtdicke und gradiert eingestellter Materialzusammensetzung der Wärmeleitschicht und tribologisch beanspruchbarer Hartstoffschicht,
- Fig. 4: eine axiale Draufsicht auf eine Bremsscheibe mit innerem, mittlerem und äußerem Umfangsbereich mit gradierter Wärmeleitschicht,
- Fig. 5: einen schematischen Schichtaufbau mit gradierter Schichtdicke der Wärmeleitschicht und tribologisch beanspruchbarerer Hartstoffschicht,
- Fig. 6: einen schematischen Schichtaufbau mit einer Kombination aus gradiert eingestellter Schichtdicke der Wärmeleitschicht und gradiert eingestellter Materialzusammensetzung der Wärmeleitschicht und tribologisch beanspruchbarerer Hartstoffschicht und
- Fig. 7: einen schematischen Schichtaufbau mit 2 über einander liegenden gradiert eingestellten Wärmeleitschichten.

### Ausführungsbeispiel 1

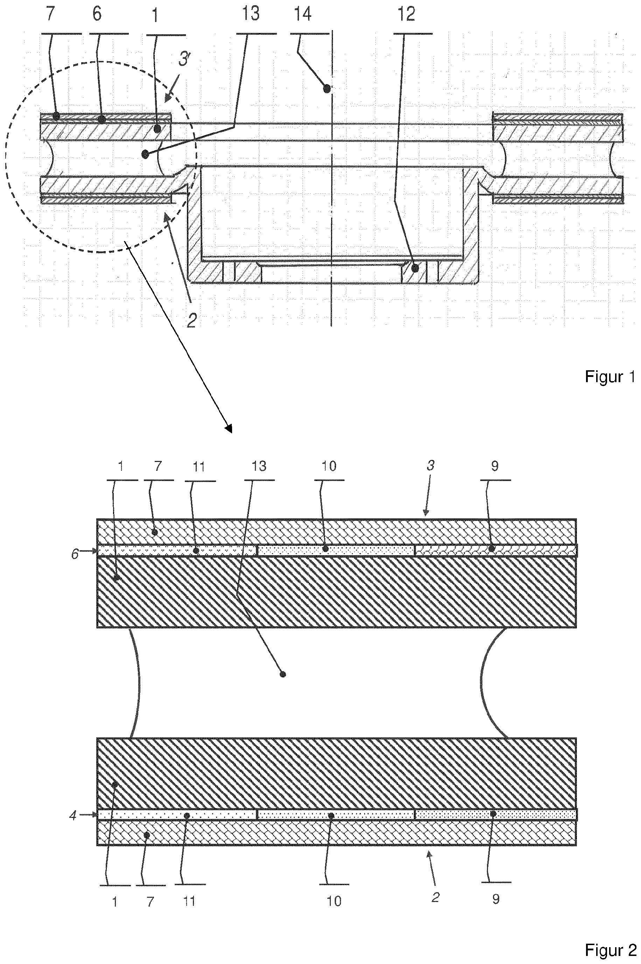

Fig. 1 und Fig. 2 zeigen schematisch einen Querschnitt durch einen Bremsscheibe mit einem metallischen Grundkörper 1 aus Grauguss, einem Befestigungselement 12 und beidseitig und diametral auf dem metallischen Grundkörper 1 angeordnete Wärmeleitschichten 4, 6 sowie eine tribologisch beanspruchbare Hartstoffschicht 8.

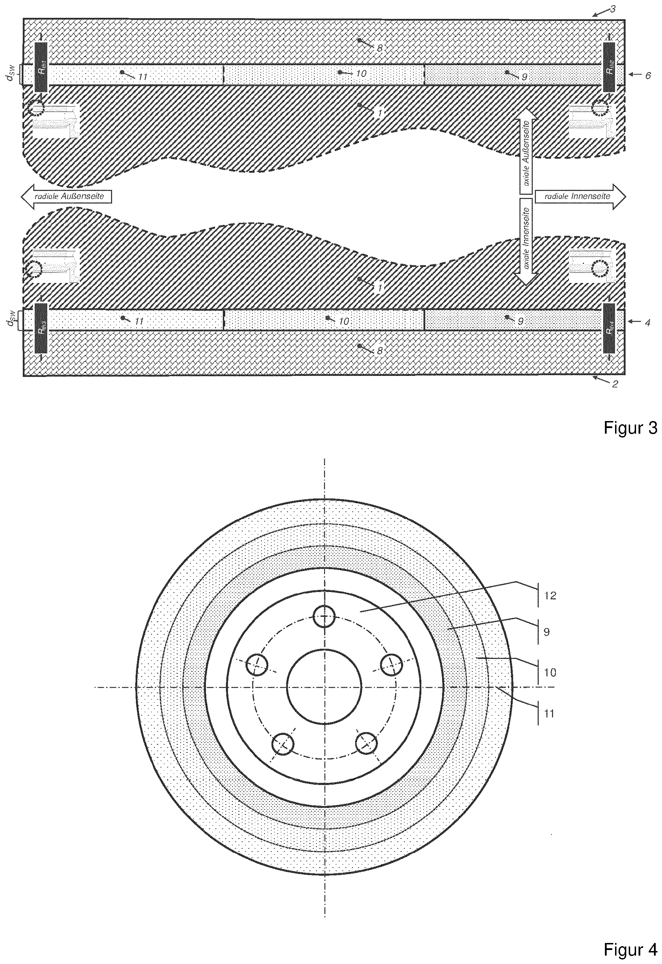

Die einer rotierenden Achse 14 zugewandte erste Wärmeleitschicht 4 (Fig. 3) besteht aus einer Fe-basierten Legierung und die einer rotierenden Achse 14 abgewandte erste Wärmeleitschicht 6 besteht aus einer Ni-basierten Legierung, wobei die Wärmeleitschichten 4 und 6 mittels Laser-Auftragsschweißen auf dem metallischen Grundkörper 1 aus Grauguss angeordnet sind.

Auf der jeweiligen Wärmeleitschicht 4 und 6 ist eine tribologisch beanspruchbare Hartstoffschicht 8 aus Wolframcarbid mit einer Edelstahlmatrix der Werkstoffnummer DIN EN 1.4016 (430L) mit einer gemittelte Schichtdicke von 120µm angeordnet, die eine Wärmeleitfähigkeit λ von 78 W/(m·K) aufweist.

In Fig. 4 ist eine Draufsicht auf die Bremsscheibe dargestellt, wobei die Bremsscheibe zwei diametral angeordnete Wärmeleitschichten 4 und 6 aufweist, nämlich eine einer rotierenden Achse zugewandte erste Wärmeleitschicht 4 und eine einer rotierenden Achse 14 abgewandte Wärmeleitschicht 6.

Die einer rotierenden Achse 14 zugewandte erste Wärmeleitschicht 4 weist in radialer Richtung insgesamt drei Umfangsbereiche 9, 10 und 11 mit unterschiedlichen Materialien auf. Das erste Material dieser Wärmeleitschicht 4 weist in radialer Richtung in einem inneren Umfangsbereich 9, der 35% der Umfangsfläche des Reibbereiches umfasst, eine Wärmeleitfähigkeit λ₁ von 10 W/(m·K) auf, das zweite Material weist in radialer Richtung in einem mittleren Umfangsbereich 10, der 35 bis 60% der Umfangsfläche des Reibbereiches umfasst, eine Wärmeleitfähigkeit λ₂ von 25 W/(m·K) auf und das dritte Material weist in radialer Richtung in einem äußeren Umfangsbereich 11, der 60% bis zum Außenumfang der Umfangsfläche des Reibbereiches umfasst, eine Wärmeleitfähigkeit λ₃ von 55 W/(m - K) auf.

Die einer rotierenden Achse 14 abgewandte Wärmeleitschicht 6 weist in radialer Richtung ebenfalls insgesamt drei Umfangsbereich 9, 10 und 11 mit unterschiedlichen Materialien auf. Das erste Material der einer rotierenden Achse 14 abgewandten Wärmeleitschicht 6 weist in radialer Richtung in einem inneren Umfangsbereich 9, der 30% der Umfangsfläche des Reibbereiches umfasst, eine Wärmeleitfähigkeit λ₁ von 12 W/(m·K) auf, das zweite Material weist in radialer Richtung in einem mittleren Umfangsbereich 10, der 30% bis 45% der Umfangsfläche des Reibbereiches umfasst, eine Wärmeleitfähigkeit λ₂ von 23 W/(m·K) auf und das dritte Material weist in radialer Richtung in einem äußeren Umfangsbereich 11, der 45% bis zum Außenumfang der Umfangsfläche des Reibbereiches umfasst, eine Wärmeleitfähigkeit λ₃ von 48 W/(m·K) auf.

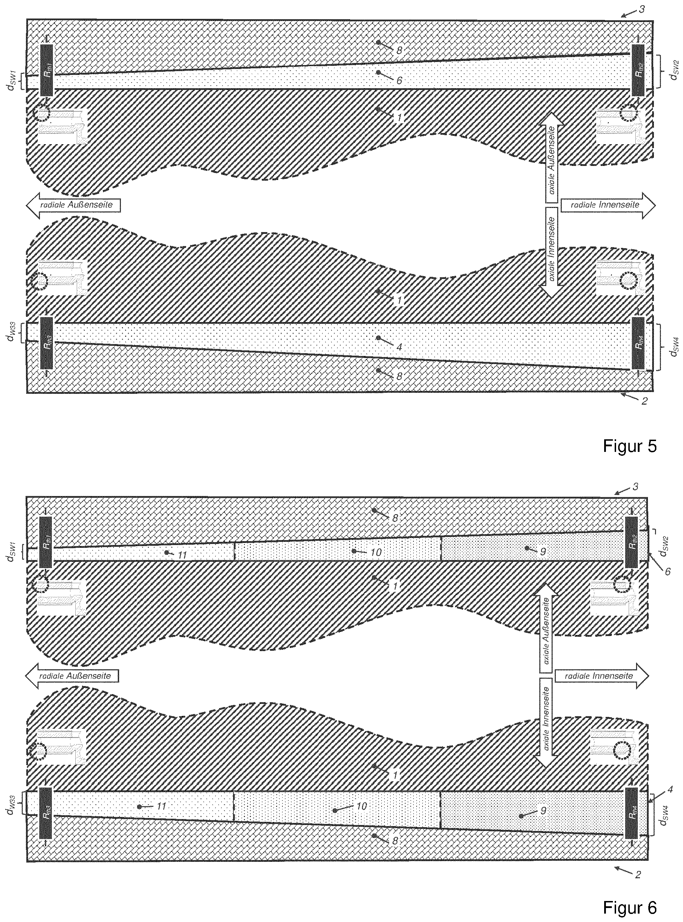

Die einer rotierenden Achse 14 zugewandte erste Wärmeleitschicht 4 weist wie in Fig. 3 und 6 dargestellt, in radialer Richtung eine konstant abnehmende Schichtdicke dsw auf, wobei die geringste Schichtdicke dsws am Außenumfang des Reibbereiches mit 90µm und die größte Schichtdicke d_{SW4} am Innenumfang des Reibbereichs mit 145µm vorliegt.

Die einer rotierenden Achse 14 abgewandte Wärmeleitschicht 6 weist, wie in den Fig. 3 und 6 dargestellt, in radialer Richtung eine konstante Schichtdicke dsw auf, die 120µm beträgt.

Die angeordneten Wärmeleitschichten 4 und 6 ermöglichen einen homogenen Wärmehaushalt in der tribologisch beanspruchbaren Hartstoffschicht 1, mit dem eine schnellere thermische Einsatzbereitschaft in der gesamten Umfangsfläche der Reibbereiche 2 und 3 ermöglicht wird. Zudem verhindern die gradiert eingestellten Wärmeleitschichten 4 und 6 und die unterschiedliche Schichtdicken das Auftreten des Schirmungseffekts, wodurch die Rissbildung in der Bremsscheibe verhindert wird.

### Ausführungsbeispiel 2

Fig. 1 und Fig. 2 zeigen schematisch einen Querschnitt durch einen Bremsscheibe mit einem metallischen Grundkörper 1 aus Grauguss, einem Befestigungselement 12 und einer beidseitig und diametral auf dem metallischen Grundkörper angeordnete Wärmeleitschichten 4 und 6 sowie eine tribologisch beanspruchbare Hartstoffschicht 8.

Die einer rotierenden Achse 14 zugewandte erst Wärmeleitschicht 4 (Fig. 3) besteht aus einer Cr-basierten Legierung und die einer rotierenden Achse 14 abgewandte Wärmeleitschicht besteht aus einer Cu-basierten Legierung, wobei die Wärmeleitschichten 4 und 6 mittels Laser-Auftragsschweißen auf dem metallischen Grundkörper 1 aus Grauguss angeordnet sind.

Auf der jeweiligen Wärmeleitschicht 4 und 6 ist eine tribologisch beanspruchbare Hartstoffschicht 8 aus Wolframcarbid mit einer Edelstahlmatrix der Werkstoffnummer DIN EN 1.4016 (430L) mit einer gemittelten Schichtdicke von 120µm angeordnet, die eine Wärmeleitfähigkeit λ von 78 W/(m·K) aufweist.

In Fig. 4 ist eine Draufsicht auf die Bremsscheibe dargestellt, wobei die Bremsscheibe zwei diametral angeordnete Wärmeleitschichten aufweist, nämlich eine einer rotierenden Achse 14 zugewandte und eine einer rotierenden Achse 14 abgewandte Wärmeleitschicht 4, 6.

Die einer rotierenden Achse 14 zugewandte Wärmeleitschicht 4 weist in radialer Richtung insgesamt drei Bereiche 9, 10 und 11 mit unterschiedlichen Materialien auf. Das erste Material dieser Wärmeleitschicht 4 weist in radialer Richtung in einem inneren Umfangsbereich 9, der 30% der Umfangsfläche des Reibbereiches umfasst, eine Wärmeleitfähigkeit λ₁ von 12 W/(m·K) auf, das zweite Material der Wärmeleitschicht weist in radialer Richtung in einem mittleren Umfangsbereich 10, der 40% der Umfangsfläche des Reibbereiches umfasst, eine Wärmeleitfähigkeit λ₂ von 23 W/(m·K) auf und das dritte Material der Wärmeleitschicht weist in radialer Richtung in einem äußeren Umfangsbereich 11, der 30% der Umfangsfläche des Reibbereiches umfasst, eine Wärmeleitfähigkeit λ₃ von 36 W/(m·K) auf.

Die einer rotierenden Achse 14abgewandte Wärmeleitschicht 6 weist in radialer Richtung insgesamt drei Bereiche 9, 10 und 11 mit unterschiedlichen Materialien auf. Das erste Material dieser Wärmeleitschicht weist in radialer Richtung in einem inneren Umfangsbereich 9, der 30% der Umfangsfläche des Reibbereiches umfasst, eine Wärmeleitfähigkeit λ₁ von 12 W/(m·K) auf, das zweite Material der Wärmeleitschicht weist in radialer Richtung in einem mittleren Umfangsbereich, der 40% der Umfangsfläche des Reibbereiches umfasst, eine Wärmeleitfähigkeit λ₂ von 23 W/(m·K) auf und das dritte Material der Wärmeleitschicht weist in radialer Richtung in einem äußeren Umfangsbereich 11, der 30% der Umfangsfläche des Reibbereiches umfasst, eine Wärmeleitfähigkeit λ₃ von 36 W/(m·K) auf.

Die einer rotierenden Achse 14 abgewandte Wärmeleitschicht 6 und die einer rotierenden Achse 14 zugewandte Wärmeleitschicht 4 weisen gemäß Fig. 5 in radialer Richtung eine konstant abnehmende Schichtdicke dsw auf, wobei die geringste Schichtdicke d_{SWi} und dsws am Außenumfang des Reibbereiches mit 80µm und die größte Schichtdicke d_{SW2} und d_{SW4} am Innenumfang des Reibbereichs mit 160µm vorliegt.

Die angeordneten Wärmeleitschichten 4 und 6 ermöglichen einen homogenen Wärmehaushalt in der tribologisch beanspruchbaren Hartstoffschicht 7, mit dem eine schnellere thermische Einsatzbereitschaft in der gesamten Umfangsfläche der Reibbereiche 2 und 3 ermöglicht wird. Zudem verhindern die gradiert eingestellten Wärmeleitschichten 4 und 6 und die unterschiedliche Schichtdicken das Auftreten des Schirmungseffekts, wodurch die Rissbildung in der Bremsscheibe verhindert wird.

### Ausführungsbeispiel 3

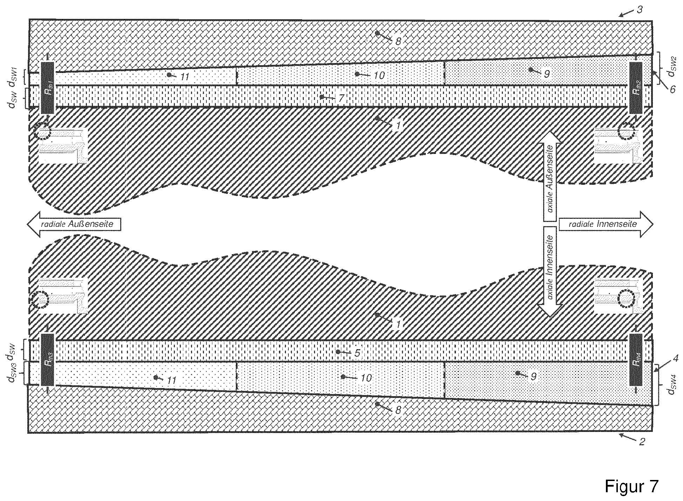

Fig. 7 zeigt einen ersten Reibbereich 2 oder zweiten Reibbereich 3, bei dem auf dem metallischen Grundkörper 1 zwei unterschiedlichen Wärmeleitschichten 4 und 5 sowie eine tribologisch beanspruchbare Hartstoffschicht 8 angeordnet sind.

Die Wärmeleitschicht 5 besteht aus einer Al-basierten Legierung ohne Gradierung, ist auf dem metallischen Grundköper 1 angeordnet. Die Wärmeleitschicht 4 ist auf der Wärmeleitschicht 5 angeordnet und besteht aus einer Cu-basierten Legierung.

Die Wärmeleitschicht 5 weist in radialer Richtung insgesamt drei Bereiche 9, 10 und 11 mit unterschiedlichen Materialien auf. Das erste Material dieser Wärmeleitschicht weist in radialer Richtung in einem inneren Umfangsbereich 9, der 30% der Umfangsfläche des Reibbereiches umfasst, eine Wärmeleitfähigkeit λ₁ von 12 W/(m·K) auf, das zweite Material der Wärmeleitschicht weist in radialer Richtung in einem mittleren Umfangsbereich 10, der 40% der Umfangsfläche des Reibbereiches umfasst, eine Wärmeleitfähigkeit λ₂ von 23 W/(m·K) auf und das dritte Material der Wärmeleitschicht weist in radialer Richtung in einem äußeren Umfangsbereich 11, der 30% der Umfangsfläche des Reibbereiches umfasst, eine Wärmeleitfähigkeit λ₃ von 36 W/(m·K) auf.

Die Wärmeleitschicht 5 weist in radialer Richtung eine konstante Schichthöhe mit einer gemittelten Schichtdicke dsw von 120µm auf.

Die angeordneten Wärmeleitschichten 4 und 5 ermöglichen einen homogenen Wärmehaushalt in der tribologisch beanspruchbaren Hartstoffschicht 1, mit dem eine schnellere thermische Einsatzbereitschaft in der gesamten Umfangsfläche der Reibbereiche 2 und 3 ermöglicht wird. Zudem verhindern die gradiert eingestellten Wärmeleitschichten 4 und 5 und die unterschiedliche Schichtdicken das Auftreten des Schirmungseffekts, wodurch die Rissbildung in der Bremsscheibe verhindert wird.

### Bezugszeichenliste

1 - metallischer Grundkörper
2 - einer rotierenden Achse zugewandter erster Reibbereich
3 - einer rotierenden Achse abgewandter zweiter Reibbereich
4 - einer rotierenden Achse zugewandte erste Wärmeleitschicht
5 - einer rotierenden Achse zugewandte zweite Wärmeleitschicht
6 - einer rotierenden Achse abgewandte erste Wärmeleitschicht
7 - einer rotierenden Achse abgewandte zweite Wärmeleitschicht
8 - tribologisch beanspruchbare Hartstoffschicht
9 - innerer Umfangsbereich
10 - mittlerer Umfangsbereich
11 - äußerer Umfangsbereich
12 - Befestigungselement
13 - Belüftungskanäle
14 - Rotationsachse

## Patentansprüche

1. Bremsscheibe, aufweisend einen metallischen Grundkörper (1), der mindestens ein ringförmig ausgebildetes Befestigungselement (12) zum Befestigen der Bremsscheibe an einer rotierenden Achse (14), einen ersten Reibbereich (2) , der einer rotierenden Achse (14) zugewandt und als Kreisfläche ausgebildet ist, und einen zweiten Reibbereich (3), der dem ersten Reibbereich (2) diametral gegenüberliegend und einer rotierenden Achse abgewandt angeordnet ist, wobei der metallische Grundkörper (1) im Bereich des ersten und zweiten Reibbereiches (2, 3) mindestens eine ringförmig ausgebildete Wärmeleitschicht (4, 6) aufweist, auf der mindestens eine tribologische beanspruchbare Hartstoffschicht (8) angeordnet ist, wobei die mindestens eine Wärmeleitschicht (4, 6) auf dem metallischen Grundkörper (1) und die tribologisch beanspruchbare Hartstoffschicht (8) auf der Wärmeleitschicht (4, 6) mittels Laser-Auftragsschweißen angeordnet sind, sodass eine stoffschlüssige Verbindung der Schichten realisiert ist,
**dadurch gekennzeichnet, dass**
die Wärmeleitschicht (4, 6) aus mindestens zwei unterschiedlichen Materialien besteht und die Wärmeleitfähigkeit λ innerhalb der Wärmeleitschicht (4, 6) gradiert eingestellt ist, wobei mindestens in einem inneren Umfangsbereich (9) der ersten und/oder zweiten Reibbereiche (2, 3) ein metallisches oder keramisches Material und/oder eine metallischen Legierung mit einer Wärmeleitfähigkeit λ₁ vorhanden ist, und wobei in einem äußeren Umfangsbereich (11) der ersten und/oder zweiten Reibbereiche (2, 3) ein metallisches oder keramisches Material und/oder eine metallischen Legierung mit einer Wärmeleitfähigkeit λ₂ vorhanden ist, wobei mindestens λ₁ < λ < λ₂ ist.

2. Bremsscheibe, aufweisend einen metallischen Grundkörper (1), der mindestens ein ringförmig ausgebildetes Befestigungselement (12) zum Befestigen der Bremsscheibe an einer rotierenden Achse (14), einen ersten Reibbereich (2), der einer rotierenden Achse zugewandt und als Kreisfläche ausgebildet ist, und einen zweiten Reibbereich (3), der dem ersten Reibbereich (2) diametral gegenüberliegend und einer rotierenden Achse (14) abgewandt angeordnet ist, wobei der metallische Grundkörper (1) im Bereich des ersten und/oder zweiten Reibbereiches (2, 3) mindestens eine ringförmig ausgebildete Wärmeleitschicht (4, 6) aufweist, auf der mindestens eine tribologische beanspruchbare Hartstoffschicht (8) angeordnet ist, wobei die mindestens eine Wärmeleitschicht (4, 6) auf dem metallischen Grundkörper (1) und die tribologisch beanspruchbare Hartstoffschicht (8) auf der Wärmeleitschicht (4, 6) mittels Laser-Auftragsschweißen angeordnet sind, sodass eine stoffschlüssige Verbindung der Schichten realisiert ist,
**dadurch gekennzeichnet, dass**
mindestens eine der Wärmeleitschichten (4, 6) in radialer Richtung zum Außenumfang der Bremsscheibe eine gradiert ausgebildete Schichtdicke dsw aufweist, wodurch der spezifische Wärmewiderstand Rₜₕᵢ in radialer Richtung zum Außenumfang der Bremsscheibe in der Wärmeleitschicht (4, 6) abnimmt.

3. Bremsscheibe nach Anspruch 1 oder 2, bei der mindestes zwei Wärmeleitschichten angeordnet sind, wobei eine erste Wärmeleitschicht auf dem metallischen Grundkörper und eine zweite Wärmeleitschicht auf der ersten Wärmeleitschicht angeordnet ist, wobei die mindestens zweite Wärmeleitschicht jeweils einen Grenzflächenbereich zur tribologisch beanspruchbaren Hartstoffschicht und zur ersten Wärmeleitschicht bildet.

4. Bremsscheibe nach mindestens einem der vorhergehenden Ansprüche, bei dem die mindestens eine Wärmeleitschicht und/oder tribologisch beanspruchbare Hartstoffschicht auf dem einer rotierenden Achse zugewandten Reibbereich gegenüber der mindestens einen Wärmeleitschicht und/oder beanspruchbaren Hartstoffschicht auf dem einer rotierenden Achse abgewandten Reibbereich mit unterschiedlicher Schichtdicke ausgebildet ist.

5. Bremsscheibe nach mindestens einem der vorhergehenden Ansprüche, bei der in radialer Richtung zum Außenumfang der Bremsscheibe mindestens eine Wärmeleitschicht in einem inneren Umfangsbereich, der sich bis maximal 40% der Umfangsfläche erstreckt, ein Material mit einer Wärmeleitfähigkeit λ₁ von 10 W/(m·K) bis 14 W/(m·K), in einem mittleren Umfangsbereich, der sich von 30% bis maximal 65% der Umfangsfläche erstreckt, ein Material mit einer Wärmeleitfähigkeit λ₂ von 12 W/(m·K) bis 26 W/(m·K) und in einem äußeren Umfangsbereich, der sich von 60% bis zum Außenumfang der Umfangsfläche erstreckt, ein Material mit einer Wärmeleitfähigkeit λ₃ von 24 W/(m.K) bis 40 W/(m·K) vorhanden ist.

6. Bremsscheibe nach mindestens einem der vorhergehenden Ansprüche, bei der mindestens eine Wärmeleitschicht in radialer Richtung zum Außenumfang der Bremsscheibe eine kontinuierlich oder sprunghaft abnehmende Schichtdicke dsw aufweist.

7. Bremsscheibe nach mindestens einem der vorhergehenden Ansprüche, bei der mindestens eine Wärmeleitschicht eine Schichtdicke d_{SWi} von 50µm bis 500µm, besonders vorteilhaft eine Schichtdicke d_{SWi} von 100µm bis 150µm, aufweist.

8. Bremsscheibe nach mindestens einem der vorhergehenden Ansprüche, bei der in radialer Richtung zum Außenumfang der Bremsscheibe die Wärmeleitschicht in einem inneren Umfangsbereich, der sich bis maximal 40% der Umfangsfläche erstreckt, eine 10% - 15% größere Schichtdicke d_{SW1} und in einem mittleren Umfangsbereich, der sich von 30% bis maximal 65% der Umfangsfläche erstreckt, eine 5% - 10% größere Schichtdicke d_{SW2} gegenüber der Schichtdicke dsws in einem äußeren Umfangbereich, der sich von 60% der Umfangsfläche bis zum Außenumfang erstreckt, aufweist, wobei die Schichtzusammensetzung aus Wärmeleitschicht und tribologisch beanspruchbarer Hartstoffschicht konstant ist.

9. Bremsscheibe nach mindestens einem der vorhergehenden Ansprüche, bei der die Wärmeleitschicht aus einer Al-basierten, Fe-basierten, Ni-basierten Cr-basierten und/oder Cu-basierten Legierung hergestellt ist.

10. Bremsscheibe nach mindestens einem der vorhergehenden Ansprüche, bei der mindestens die Wärmeleitschicht zusätzlich karbidische und/oder oxidkeramische Hartstoffpartikel aufweist, wobei besonders vorteilhaft die Hartstoffpartikel der Wärmeleitschicht eine mittlere Partikelgröße D₅₀ von 0,5µm bis 120µm aufweisen und/oder der Volumenanteil der Hartstoffpartikel in der Wärmeleitschicht 1% bis 80%, besonders vorteilhaft 30% bis 50% beträgt.

11. Bremsscheibe nach mindestens einem der vorhergehenden Ansprüche, bei der als Wärmeleitschicht eine Legierung vorhanden ist, bei der in axialer Richtung die geringste Wärmeleitfähigkeit in einem radialen Teilbereich und im Grenzflächenbereich zur tribologisch beanspruchbaren Hartstoffschicht und die höchste Wärmeleitfähigkeit im Grenzflächenbereich zu einer weiteren Wärmeleitschicht oder dem metallischen Grundkörper vorhanden ist.

12. Bremsscheibe nach mindestens einem der vorhergehenden Ansprüche, bei der mindestens zwischen dem metallischen Grundkörper und der mindestens ersten Wärmeleitschicht eine Haftschicht vorhanden ist.

13. Bremsscheibe nach mindestens einem der vorhergehenden Ansprüche, bei der die tribologisch beanspruchbare Hartstoffschicht mindestens eine Schichtdicke ds_{H} von 50µm bis 500µm, besonders vorteilhaft eine Schichtdicke d_{SH} von 200µm bis 250µm aufweist.

14. Bremsscheibe nach mindestens einem der vorhergehenden Ansprüche, bei der die tribologisch beanspruchbare Hartstoffschicht aus einem Cermet, besonders vorteilhaft aus Siliciumcarbid, Borcarbid, Wolframcarbid, Vanadiumcarbid, Titancarbid, Tantalcarbid, Chromcarbid und/oder einer Oxidkeramik, und ganz besonders vorteilhaft aus Wolframcarbid mit einer Edelstahlmatrix der Werkstoffgruppe 4 oder 5 mit einem Ni-Anteil ≤ 15 Ma.-%.

15. Verfahren zur Herstellung der nach mindestens einem der Ansprüche 1 bis 14 beanspruchten Bremsscheibe, bei dem mindestens auf einem metallischen Grundkörper (1) mittels Laserstrahl-Auftragsschweißen mindestens teilweise eine erste Wärmeleitschicht (4, 6) stoffschlüssig angeordnet wird, und nachfolgend eine tribologisch beanspruchbare Hartstoffschicht (8) auf der ersten Wärmeleitschicht (4, 6) stoffschlüssig angeordnet wird, wobei die Wärmeleitschicht (4, 6) aus mindestens zwei unterschiedlichen Materialien angeordnet wird und die Wärmeleitfähigkeit λᵢ innerhalb der Wärmeleitschicht gradiert eingestellt wird, sodass die Wärmeleitschicht in radialer Richtung eine zunehmende Wärmeleitfähigkeit λ aufweist, wobei mindestens in einem inneren Umfangsbereich (9) der ersten und/oder zweiten Reibbereiche (2, 3) ein metallisches oder keramisches Material und/oder eine metallischen Legierung mit einer Wärmeleitfähigkeit λ₁ und in einem äußeren Umfangsbereich (11) der ersten und/oder zweiten Reibbereiche (2, 3) ein metallisches oder keramisches Material und/oder eine metallischen Legierung mit einer Wärmeleitfähigkeit λ₂ angeordnet wird, und abschließend die Oberfläche der tribologisch beanspruchbaren Hartstoffschicht (8) bearbeitet wird.

16. Verfahren zur Herstellung der nach mindestens einem der Ansprüche 2 bis 14 beanspruchten Bremsscheibe, bei dem mindestens auf einem metallischen Grundkörper (1) mittels Laserstrahl-Auftragsschweißen mindestens teilweise eine erste Wärmeleitschicht (4, 6) stoffschlüssig angeordnet wird, und nachfolgend eine tribologisch beanspruchbare Hartstoffschicht (8) auf der ersten Wärmeleitschicht (4, 6) stoffschlüssig angeordnet wird, sodass eine stoffschlüssige Verbindung der Schichten (4, 6, 8) realisiert wird, wobei mindestens eine Wärmeleitschicht (4, 6) in radialer Richtung zum Außenumfang der Bremsscheibe mit einer gradiert ausgebildeten Schichtdicke dsw angeordnet wird, wodurch der spezifische Wärmewiderstand Rₜₕᵢ in radialer Richtung zum Außenumfang der Bremsscheibe in der Wärmeleitschicht (4, 6) abnimmt, wobei besonders vorteilhaft in einem ersten Schritt in radialer Richtung die Wärmeleitschicht in einem inneren Umfangsbereich, der sich bis maximal 35% der Umfangsfläche erstreckt, mit einer 10% - 15% größere Schichtdicke d_{S1} und in einem mittleren Umfangsbereich, der sich von 30% bis maximal 65% der Umfangsfläche erstreckt, mit einer 5% - 10% größeren Schichtdicke d_{S2} gegenüber der Schichtdicke d_{S3} in einem äußeren Umfangbereich, der sich von 60% der Umfangsfläche bis zum Außenumfang der Bremsscheibe erstreckt, angeordnet wird, sodass der spezifische Wärmewiderstand Rₜₕᵢ in der Wärmeleitschicht vom inneren Umfangsbereich zum äußeren Umfangsbereich gradiert abnimmt.

17. Verfahren nach mindestens einem der Ansprüche 15 bis 16, bei dem in radialer Richtung zum Außenumfang der Bremsscheibe mindestens eine Wärmeleitschicht in einem inneren Umfangsbereich, der sich bis maximal 35% der Umfangsfläche erstreckt, ein Material mit einer Wärmeleitfähigkeit λ₁ von 10 W/(m·K) bis 14 W/(m·K), in einem mittleren Umfangsbereich, der sich von 30% bis maximal 65% der Umfangsfläche erstreckt, ein Material mit einer Wärmeleitfähigkeit λ₂ von 12 W/(m·K) bis 26 W/(m·K) und in einem äußeren Umfangsbereich, der sich von 60% bis zum Außenumfang der Umfangsfläche erstreckt, ein Material mit einer Wärmeleitfähigkeit λ₃ von 24 W/(m.K) bis 40 W/(m·K) angeordnet wird.

18. Verfahren nach mindestens einem der vorhergehenden Ansprüche 15 bis 17, bei dem vor dem Anordnen der Wärmeleitschicht mittels Laser-Auftragsschweißen der metallische Grundkörper mindestens in einem Teilbereich der ersten und/oder zweiten Reibbereiche auf eine Temperatur von 150°C bis 500°C erwärmt wird.

## Claims

1. Brake disk having a metallic main body (1) which at least one ring-shaped securing element (12) for securing of the brake disk on a rotating axis (14), a first friction region (2) that faces a rotating axis (14) and takes the form of a circular surface, and a second friction region (3) arranged so as to be diametrically opposite the first friction region (2) and remote from a rotating axis, wherein the metallic main body (1), in the region of the first and second friction regions (2, 3), has at least one ring-shaped heat conduction layer (4, 6) atop which is disposed at least one tribologically stressable hard material layer (8), wherein the at least one heat conduction layer (4, 6) is disposed atop the metallic main body (1) and the tribologically stressable hard material layer (8) atop the heat conduction layer (4, 6) by means of laser buildup welding, so as to achieve a cohesive bond between the layers,
**characterized in that**
the heat conduction layer (4, 6) consists of at least two different materials and the thermal conductivity λ within the heat conduction layer (4, 6) is gradated, wherein there is a metallic or ceramic material and/or a metallic alloy having a thermal conductivity λ₁ at least in an inner circumferential region (9) of the first and/or second friction regions (2, 3), and wherein there is a metallic or ceramic material and/or a metallic alloy having a thermal conductivity λ₂ in an outer circumferential region (11) of the first and/or second friction regions (2, 3), wherein at least λ₁ < λ < λ₂.

2. Brake disk having a metallic main body (1) which at least one ring-shaped securing element (12) for securing of the brake disk on a rotating axis (14), a first friction region (2) that faces a rotating axis and takes the form of a circular surface, and a second friction region (3) arranged so as to be diametrically opposite the first friction region (2) and remote from a rotating axis (14), wherein the metallic main body (1), in the region of the first and/or second friction regions (2, 3), has at least one ring-shaped heat conduction layer (4, 6) atop which is disposed at least one tribologically stressable hard material layer (8), wherein the at least one heat conduction layer (4, 6) is disposed atop the metallic main body (1) and the tribologically stressable hard material layer (8) atop the heat conduction layer (4, 6) by means of laser buildup welding, so as to achieve a cohesive bond between the layers,
**characterized in that**
at least one of the heat conduction layers (4, 6), in radial direction relative to the outer circumference of the brake disk, has a gradated layer thickness dsw, as a result of which the specific heat resistance Rₜₕᵢ decreases in the heat conduction layer (4, 6) in radial direction toward the outer circumference of the brake disk.

3. Brake disk according to Claim 1 or 2, in which there is an arrangement of at least two heat conduction layers, wherein a first heat conduction layer is disposed atop the metallic main body and a second heat conduction layer atop the first heat conduction layer, wherein the at least second heat conduction layer in each case forms an interfacial region with the tribologically stressable hard material layer and with the first heat conduction layer.

4. Brake disk according to at least one of the preceding claims, in which the at least one heat conduction layer and/or tribologically stressable hard material layer on the friction region facing a rotating axis is formed with different layer thickness compared to the at least one heat conduction layer and/or stressable hard material layer on the friction region remote from a rotating axis.

5. Brake disk according to at least one of the preceding claims, in which, in radial direction toward the outer circumference of the brake disk, there is at least one heat conduction layer in an inner circumferential region that extends up to a maximum of 40% of the circumferential area, a material having a thermal conductivity λ₁ of 10 W/(m·K) to 14 W/(m·K), in a middle circumferential region that extends from 30% to a maximum of 65% of the circumferential area a material having a thermal conductivity λ₂ of 12 W/(m·K) to 26 W/(m·K), and in an outer circumferential region that extends from 60% up to the outer circumference of the circumferential area a material having a thermal conductivity λ₃ of 24 W/(m·K) to 40 W/(m·K).

6. Brake disk according to at least one of the preceding claims, in which at least one heat conduction layer has a layer thickness dsw that decreases continuously or abruptly in radial direction toward the outer circumference of the brake disk.

7. Brake disk according to at least one of the preceding claims, in which at least one heat conduction layer has a layer thickness d_{SWi} of 50 µm to 500 pm, particularly advantageously a layer thickness d_{SWi} of 100 µm to 150 pm.

8. Brake disk according to at least one of the preceding claims, in which, in radial direction toward the outer circumference of the brake disk, the heat conduction layer has a 10%-15% greater layer thickness d_{SW1} in an inner circumferential region that extends up to a maximum of 40% of the circumferential area and, in a middle circumferential region that extends from 30% to a maximum of 65% of the circumferential area, a 5%-10% greater layer thickness d_{SW2} compared to the layer thickness d_{SW3} in an outer circumferential region that extends from 60% of the circumferential area to the outer circumference, wherein the layer composition composed of heat conduction layer and tribologically stressable hard material layer is constant.

9. Brake disk according to at least one of the preceding claims, in which the heat conduction layer has been produced from an Al-based, Fe-based, Ni-based, Cr-based and/or Cu-based alloy.

10. Brake disk according to at least one of the preceding claims, in which at least the heat conduction layer additionally includes carbidic and/or oxide ceramic hard material particles, wherein particularly advantageously the hard material particles of the heat conduction layer have a median particle size D₅₀ of 0.5 µm to 120 µm and/or the proportion by volume of the hard material particles in the heat conduction layer is 1% to 80%, particularly advantageously 30% to 50%.

11. Brake disk according to at least one of the preceding claims, in which the heat conduction layer takes the form of an alloy in which, in axial direction, the lowest thermal conductivity is in a radial part-region and in the interfacial region with the tribologically stressable hard material layer, and the highest thermal conductivity in the interfacial region with a further heat conduction layer or the metallic main body.

12. Brake disk according to at least one of the preceding claims, in which there is a bonding layer at least between the metallic main body and the at least first heat conduction layer.

13. Brake disk according to at least one of the preceding claims, in which the tribologically stressable hard material layer has at least a layer thickness d_{SH} of 50 µm to 500 pm, particularly advantageously a layer thickness d_{SH} of 200 µm to 250 µm.

14. Brake disk according to at least one of the preceding claims, in which the tribologically stressable hard material layer of a cermet, particularly advantageously of silicon carbide, boron carbide, tungsten carbide, vanadium carbide, titanium carbide, tantalum carbide, chromium carbide and/or an oxide ceramic, and very particularly advantageously of tungsten carbide with a stainless steel matrix of material group 4 or 5 with an Ni content of ≤ 15% by mass.

15. Method of producing the brake disk according to at least one of Claims 1 to 14, in which a first heat conduction layer (4, 6) is disposed in a cohesively bonded manner at least partly at least atop a metallic main body (1) by means of laser buildup welding, and then a tribologically stressable hard material layer (8) is disposed in a cohesively bonded manner atop the first heat conduction layer (4, 6), wherein the heat conduction layer (4, 6) is disposed of at least two different materials and the thermal conductivity λᵢ within the heat conduction layer is gradated, such that the heat conduction layer has increasing thermal conductivity λ in radial direction, wherein a metallic or ceramic material and/or a metallic alloy having a thermal conductivity λ₁ is disposed at least in an inner circumferential region (9) of the first and/or second friction regions (2, 3) and a metallic or ceramic material and/or a metallic alloy having a thermal conductivity λ₂ is disposed in an outer circumferential region (11) of the first and/or second friction regions (2, 3), and the surface of the tribologically stressable hard material layer (8) is finally processed.

16. Method of producing the brake disk according to at least one of Claims 2 to 14, in which a first heat conduction layer (4, 6) is disposed in a cohesively bonded manner at least partly at least atop a metallic main body (1) by means of laser buildup welding, and then a tribologically stressable hard material layer (8) is disposed in a cohesively bonded manner atop the first heat conduction layer (4, 6), so as to achieve a cohesive bond between the layers (4, 6, 8), wherein at least one heat conduction layer (4, 6), in radial direction relative to the outer circumference of the brake disk, is disposed with gradated layer thickness dsw, as a result of which the specific heat resistance Rₜₕᵢ decreases in the heat conduction layer (4, 6) in radial direction toward the outer circumference of the brake disk, wherein particularly advantageously, in a first step, in radial direction, the heat conduction layer is disposed in an inner circumferential region that extends up to a maximum of 35% of the circumferential area with a 10%-15% greater layer thickness dsi, and in an inner circumferential region that extends from 30% to a maximum of 65% of the circumferential area with a 5%-10% greater layer thickness d_{S2} compared to the layer thickness d_{S3} in an outer circumferential region that extends from 60% of the circumferential area to the outer circumference of the brake disk, such that the specific heat resistance Rₜₕᵢ decreases in a gradated manner in the heat conduction layer from the inner circumferential region to the outer circumferential region.

17. Method according to at least one of Claims 15 to 16, in which, in radial direction toward the outer circumference of the brake disk, at least one heat conduction layer is disposed in an inner circumferential region that extends up to a maximum of 35% of the circumferential area, a material having a thermal conductivity λ₁ of 10 W/(m·K) to 14 W/(m·K), in a middle circumferential region that extends from 30% to a maximum of 65% of the circumferential area a material having a thermal conductivity λ₂ of 12 W/(m·K) to 26 W/(m·K), and in an outer circumferential region that extends from 60% up to the outer circumference of the circumferential area a material having a thermal conductivity λ₃ of 24 W/(m·K) to 40 W/(m·K).

18. Method according to at least one of preceding Claims 15 to 17, in which, before the heat conduction layer is disposed by means of laser buildup welding, the metallic main body is heated at least in a subregion of the first and/or second friction regions to a temperature of 150°C to 500°C.

## Revendications

1. Disque de frein, présentant un corps de base métallique (1), qui au moins un élément de fixation (12) configuré sous forme annulaire pour la fixation du disque de frein sur un axe rotatif (14), une première zone de friction (2), qui est tournée vers un axe rotatif (14) et est configurée sous forme de surface circulaire, et une deuxième zone de friction (3), qui est agencée diamétralement à l'opposé de la première zone de friction (2) et détournée d'un axe rotatif, le corps de base métallique (1) présentant, dans la zone de la première et de la deuxième zone de friction (2, 3), au moins une couche thermoconductrice (4, 6) configurée sous forme annulaire, sur laquelle est agencée au moins une couche de matériau dur (8) pouvant être sollicitée tribologiquement, l'au moins une couche thermoconductrice (4, 6) étant agencée sur le corps de base métallique (1) et la couche de matériau dur (8) pouvant être sollicitée tribologiquement étant agencée sur la couche thermoconductrice (4, 6) par rechargement par soudage au laser, de telle sorte qu'une liaison par matière des couches est réalisée,
**caractérisé en ce que**
la couche thermoconductrice (4, 6) est constituée d'au moins deux matériaux différents et la conductivité thermique λ à l'intérieur de la couche thermoconductrice (4, 6) est ajustée de manière graduée, un matériau métallique ou céramique et/ou un alliage métallique ayant une conductivité thermique λ₁ étant présent au moins dans une zone périphérique intérieure (9) des première et/ou deuxième zones de friction (2, 3), et un matériau métallique ou céramique et/ou un alliage métallique ayant une conductivité thermique λ₂ étant présent dans une zone périphérique extérieure (11) des première et/ou deuxième zones de friction (2, 3), avec au moins λ₁ < λ < λ₂.

2. Disque de frein, présentant un corps de base métallique (1) qui au moins un élément de fixation (12) configuré sous forme annulaire pour la fixation du disque de frein sur un axe rotatif (14), une première zone de friction (2) qui est tournée vers un axe rotatif et qui est configurée sous forme de surface circulaire, et une deuxième zone de friction (3) qui est agencée diamétralement à l'opposé à la première zone de friction (2) et détournée d'un axe rotatif (14), le corps de base métallique (1) présentant, dans la zone de la première et/ou de la deuxième zone de friction (2, 3), au moins une couche thermoconductrice (4, 6) configurée sous forme annulaire, sur laquelle est agencée au moins une couche de matériau dur (8) pouvant être sollicitée tribologiquement, l'au moins une couche thermoconductrice (4, 6) étant agencée sur le corps de base métallique (1) et la couche de matériau dur (8) pouvant être sollicitée tribologiquement étant agencée sur la couche thermoconductrice (4, 6) par rechargement par soudage au laser, de telle sorte qu'une liaison par matière des couches est réalisée,
**caractérisé en ce**
**qu'**au moins l'une des couches thermoconductrices (4, 6) présente, dans la direction radiale vers la périphérie extérieure du disque de frein, une épaisseur de couche dsw configurée sous forme graduée, moyennant quoi la résistance thermique spécifique Rₜₕᵢ diminue dans la direction radiale vers la périphérie extérieure du disque de frein dans la couche thermoconductrice (4, 6).

3. Disque de frein selon la revendication 1 ou 2, dans lequel au moins deux couches thermoconductrices sont agencées, une première couche thermoconductrice étant agencée sur le corps de base métallique et une deuxième couche thermoconductrice étant agencée sur la première couche thermoconductrice, l'au moins une deuxième couche thermoconductrice formant respectivement une zone d'interface avec la couche de matériau dur pouvant être sollicitée tribologiquement et avec la première couche thermoconductrice.

4. Disque de frein selon au moins l'une quelconque des revendications précédentes, dans lequel l'au moins une couche thermoconductrice et/ou couche de matériau dur pouvant être sollicitée tribologiquement est configurée avec une épaisseur de couche différente sur la zone de friction tournée vers un axe rotatif par rapport à l'au moins une couche thermoconductrice et/ou couche de matériau dur pouvant être sollicitée sur la zone de friction détournée d'un axe rotatif.

5. Disque de frein selon au moins l'une quelconque des revendications précédentes, dans lequel, dans la direction radiale vers la périphérie extérieure du disque de frein d'au moins une couche thermoconductrice est présent, dans une zone périphérique intérieure qui s'étend jusqu'à 40 % au maximum de la surface périphérique, un matériau ayant une conductivité thermique λ₁ de 10 W/(m·K) à 14 W/(m·K), dans une zone périphérique intermédiaire qui s'étend de 30 % à 65 % au maximum de la surface périphérique, un matériau ayant une conductivité thermique λ₂ de 12 W/(m·K) à 26 W/(m·K) et, dans une zone périphérique extérieure qui s'étend de 60 % jusqu'à la périphérie extérieure de la surface périphérique, un matériau ayant une conductivité thermique λ₃ de 24 W/(m·K) à 40 W/(m·K).

6. Disque de frein selon au moins l'une quelconque des revendications précédentes, dans lequel au moins une couche thermoconductrice présente, dans la direction radiale vers la périphérie du disque de frein, une épaisseur de couche dsw qui diminue de manière continue ou par sauts.

7. Disque de frein selon au moins l'une quelconque des revendications précédentes, dans lequel au moins une couche thermoconductrice présente une épaisseur de couche d_{SWi} de 50 µm à 500 µm, de manière particulièrement avantageuse une épaisseur de couche d_{SWi} de 100 µm à 150 µm.

8. Disque de frein selon au moins l'une quelconque des revendications précédentes, dans lequel, dans la direction radiale vers la périphérie du disque de frein, la couche thermoconductrice présente, dans une zone périphérique intérieure qui s'étend jusqu'à 40 % au maximum de la surface périphérique, une épaisseur de couche d_{SWi} supérieure de 10 % à 15 % et, dans une zone périphérique intermédiaire qui s'étend de 30 % à 65 % au maximum de la surface périphérique, une épaisseur de couche d_{SW2} supérieure de 5 % à 10 % par rapport à l'épaisseur de couche d_{SW3} dans une zone périphérique extérieure qui s'étend de 60 % de la surface périphérique jusqu'à la périphérie extérieure, la composition de couche de la couche thermoconductrice et de la couche de matériau dur pouvant être sollicitée tribologiquement étant constante.

9. Disque de frein selon au moins l'une quelconque des revendications précédentes, dans lequel la couche thermoconductrice est fabriquée à partir d'un alliage à base d'Al, à base de Fe, à base de Ni, à base de Cr et/ou à base de Cu.

10. Disque de frein selon au moins l'une quelconque des revendications précédentes, dans lequel au moins la couche thermoconductrice présente en outre des particules de matériau dur en carbure et/ou en céramique d'oxyde, les particules de matériau dur de la couche thermoconductrice présentant de manière particulièrement avantageuse une taille de particule moyenne D₅₀ de 0,5 µm à 120 µm et/ou la proportion volumique des particules de matériau dur dans la couche thermoconductrice étant de 1 % à 80 %, de manière particulièrement avantageuse de 30 % à 50 %.

11. Disque de frein selon au moins l'une quelconque des revendications précédentes, dans lequel un alliage est présent en tant que couche thermoconductrice, dans lequel, dans la direction axiale, la conductivité thermique la plus faible est présente dans une zone partielle radiale et dans la zone d'interface avec la couche de matériau dur pouvant être sollicitée tribologiquement, et la conductivité thermique la plus élevée est présente dans la zone d'interface avec une autre couche thermoconductrice ou avec le corps de base métallique.

12. Disque de frein selon au moins l'une quelconque des revendications précédentes, dans lequel une couche adhésive est présente au moins entre le corps de base métallique et l'au moins une première couche thermoconductrice.

13. Disque de frein selon au moins l'une quelconque des revendications précédentes, dans lequel la couche de matériau dur pouvant être sollicitée tribologiquement présente au moins une épaisseur de couche ds_{H} de 50 µm à 500 µm, de manière particulièrement avantageuse une épaisseur de couche d_{SH} de 200 µm à 250 µm.

14. Disque de frein selon au moins l'une quelconque des revendications précédentes, dans lequel la couche de matériau dur pouvant être sollicitée tribologiquement d'un cermet, de manière particulièrement avantageuse de carbure de silicium, de carbure de bore, de carbure de tungstène, de carbure de vanadium, de carbure de titane, de carbure de tantale, de carbure de chrome et/ou d'une céramique d'oxyde, et tout particulièrement avantageusement de carbure de tungstène avec une matrice d'acier inoxydable du groupe de matériaux 4 ou 5 avec une proportion de Ni ≤ 15 % en masse.

15. Procédé de fabrication du disque de frein revendiqué selon au moins l'une quelconque des revendications 1 à 14, dans lequel une première couche thermoconductrice (4, 6) est agencée par liaison de matière au moins partiellement sur un corps de base métallique (1) par rechargement par soudage au laser, et ensuite, une couche de matériau dur (8) pouvant être sollicitée tribologiquement est agencée par liaison de matière sur la première couche thermoconductrice (4, 6), la couche thermoconductrice (4, 6) étant agencée d'au moins deux matériaux différents et la conductivité thermique λᵢ à l'intérieur de la couche thermoconductrice étant ajustée de manière graduée, de telle sorte que la couche thermoconductrice présente une conductivité thermique X croissante dans la direction radiale, un matériau métallique ou céramique et/ou un alliage métallique ayant une conductivité thermique λ₁ étant agencé au moins dans une zone périphérique intérieure (9) des première et/ou deuxième zones de friction (2, 3) et un matériau métallique ou céramique ayant une conductivité thermique λ₂ étant agencé dans une zone périphérique extérieure (11) des première et/ou deuxième zones de friction (2, 3), et enfin, la surface de la couche de matériau dur (8) pouvant être sollicitée tribologiquement est traitée.

16. Procédé de fabrication du disque de frein revendiqué selon au moins l'une quelconque des revendications 2 à 14, dans lequel une première couche thermoconductrice (4, 6) est agencée par liaison de matière au moins partiellement au moins sur un corps de base métallique (1) par rechargement par soudage au faisceau laser, et ensuite, une couche de matériau dur (8) pouvant être sollicitée tribologiquement est agencée sur la première couche thermoconductrice (4, 6) par liaison de matière, de telle sorte qu'une liaison par matière des couches (4, 6, 8) est réalisée, au moins une couche thermoconductrice (4, 6) étant agencée dans la direction radiale vers la périphérie extérieure du disque de frein avec une épaisseur de couche dsw configurée sous forme graduée, moyennant quoi la résistance thermique spécifique Rₜₕᵢ diminue dans la direction radiale vers la périphérie extérieure du disque de frein dans la couche thermoconductrice (4, 6), de manière particulièrement avantageuse, dans une première étape, dans la direction radiale, la couche thermoconductrice étant agencée dans une zone périphérique intérieure qui s'étend jusqu'à 35 % au maximum de la surface périphérique avec une épaisseur de couche d_{S1} supérieure de 10 % à 15 %, et dans une zone périphérique intermédiaire qui s'étend de 30 % à 65 % au maximum de la surface périphérique, avec une épaisseur de couche d_{S2} supérieure de 5 % à 10 % par rapport à l'épaisseur de couche d_{S3} dans une zone périphérique extérieure qui s'étend de 60 % de la surface périphérique jusqu'à la périphérie extérieure du disque de frein, de telle sorte que la résistance thermique spécifique Rₜₕᵢ dans la couche thermoconductrice diminue de manière graduée de la zone périphérique intérieure à la zone périphérique extérieure.

17. Procédé selon au moins l'une quelconque des revendications 15 à 16, dans lequel, dans la direction radiale vers la périphérie extérieure du disque de frein d'au moins une couche thermoconductrice est agencé, dans une zone périphérique intérieure qui s'étend jusqu'à 35 % au maximum de la surface périphérique, un matériau ayant une conductivité thermique λ₁ de 10 W/(m·K) à 14 W/(m K), dans une zone périphérique intermédiaire qui s'étend de 30 % à 65 % au maximum de la surface périphérique, un matériau ayant une conductivité thermique λ₂ de 12 W/(m·K) à 26 W/(m·K) et, dans une zone périphérique extérieure qui s'étend de 60 % jusqu'à la périphérie extérieure de la surface périphérique, un matériau ayant une conductivité thermique λ₃ de 24 W/(m·K) à 40 W/(m·K).

18. Procédé selon au moins l'une quelconque des revendications 15 à 17 précédentes, dans lequel, avant l'agencement de la couche thermoconductrice par rechargement par soudage au laser, le corps de base métallique est chauffé à une température de 150 °C à 500 °C au moins dans une zone partielle des première et/ou deuxième zones de friction.
